# EUROPEAN PATENT SPECIFICATION

(11) **EP 4 026 715 B1**
(45) Date of publication and mention of the grant of the patent: **04.10.2023**
(21) Application number: 21213578.4
(22) Date of filing: 10.12.2021
(51) Int. Cl.: B60K 1/04

(54) **FUEL CELL VEHICLE**
BRENNSTOFFZELLENFAHRZEUG
VÉHICULE À PILE À COMBUSTIBLE

(30) Priority: 08.01.2021 JP 2021002088
(43) Date of publication of application: 13.07.2022
(73) Proprietor: Suzuki Motor Corporation, Hamamatsu-shi, Shizuoka 432-8611 (JP)
(72) Inventor: KAWANO, Shinya, Hamamatsu-shi, 432-8611 (JP); MIZUTANI, Kazuhiko, Hamamatsu-shi, 432-8611 (JP); OTA, Toru, Hamamatsu-shi, 432-8611 (JP)
(74) Representative: Haseltine Lake Kempner LLP

(56) References cited:
- EP-A1- 1 587 727
- EP-B1- 1 587 727
- DE-A1-102014 218 468
- JP-A- 2005 112 095

## Description

### Technical Field

The present invention relates to a fuel cell vehicle including a fuel cell unit capable of generating electric power, a fuel tank capable of storing fuel used to generate the electric power in the fuel cell unit, a motor capable of driving using the electric power generated by the fuel cell unit, and a motor control device capable of controlling the motor.

### Background Art

Development has been advanced for practical use of a fuel cell vehicle. The fuel cell vehicle includes a fuel cell unit capable of generating electric power, and a motor capable of driving using the electric power generated by the fuel cell unit, and it is configured to be able to run with the driving of the motor. Furthermore, the fuel cell vehicle includes a fuel tank capable of storing fuel used to generate the electric power in the fuel cell unit and a motor control device capable of controlling the motor.

An example of such a fuel cell vehicle includes a small electric vehicle (for example, see Patent Literature 1) including a fuel cell unit, a motor capable of being driven to rotate rear wheels using electric power generated by the fuel cell unit, an electric component including a control device capable of controlling the motor, and a fuel tank, wherein the fuel cell unit, the motor, and the electric component are accommodated in a vehicle body cover at a rear of a vehicle body, and the fuel tank is disposed outside the vehicle body cover and in front of the vehicle body.

### Citation List

### Patent Literature

Patent Literature 1 JP 2008-074200 A. DE 10 2014 218468 A1 relates to a fuel cell powered vehicle. EP 1 587 727 A1 relates to a housing for vehicle power systems.

### Summary of Invention

### Problems to be Solved by the Invention

However, in the example of the fuel cell vehicle described above, fuel or the like to be supplied to the fuel cell unit exists in compartments of electrical systems, for example, the motor and the motor control device inside the vehicle body cover. In some cases, sparks or the like generated in the electrical systems may come into contact with hydrogen or the like, resulting in causing a safety problem.

In the example of the fuel cell vehicle, performance of the fuel cell unit disposed inside the vehicle body cover may deteriorate due to heat trapped inside the vehicle body cover. As a result, the performance of the fuel cell vehicle may deteriorate.

Furthermore, in the example of the fuel cell vehicle, a large fuel cell unit and a large motor are disposed at a rear of the vehicle, and a large fuel tank is disposed at a front of the vehicle. In other words, a layout is adopted in which the large fuel cell unit, the large fuel tank, and the large motor are disposed to be dispersed throughout the vehicle. Such a layout causes an increase in size of the fuel cell vehicle.

In view of such circumstances, it is preferable to improve safety of the fuel cell vehicle, to prevent performance deterioration of the fuel cell vehicle, and to reduce the size of the fuel cell vehicle.

### Means for Solving the Problems

To solve the problems, a fuel cell vehicle as defined by the features of claim 1 is provided, including: an operating part including a front wheel located closer to a front side of the vehicle and an operating device used for a running operation; a riding part configured to be able to allow a passenger to ride in and located closer to a rear side of the vehicle from the operating part; a drive part including a rear wheel located closer to the rear side of the vehicle from the front wheel, and a drive device, the drive device including a motor configured to be able to drive the rear wheel, and a motor control device configured to be able to control the motor, the drive part being located closer to the rear side of the vehicle from the riding part; a fuel cell unit configured to be able to generate electric power used to drive the motor; and a fuel tank configured to be able to store fuel used for electric power generation in the fuel cell unit, wherein the fuel cell vehicle includes a compartment for mounting the fuel cell unit and the fuel tank, the compartment being defined by a housing, the drive part includes a front edge region located closer to the front side of the vehicle and an upper edge region located closer to an upper side, the compartment is disposed along the front edge and upper edge regions of the drive part at an outside of the drive part, the compartment includes an air inlet port configured to be able to allow air to flow thereinto and an exhaust port configured to be able to discharge gas existing in the compartment to an outside of the compartment, the air inlet port is disposed at a lower end of the compartment, and the exhaust port is disposed at a rear end of the compartment located closer to the vehicle from the drive part.

### Advantageous Effect of Invention

In the fuel cell vehicle according to the aspect, it is possible to improve safety of the fuel cell vehicle, to prevent performance deterioration of the fuel cell vehicle, and to reduce a size of the fuel cell vehicle.

### Brief Description of Drawings

Figure 1 is a left side view schematically showing a fuel cell vehicle according to an embodiment.
Figure 2 is a right side view schematically showing the fuel cell vehicle according to the embodiment.
Figure 3 is a rear view schematically showing the fuel cell vehicle according to the embodiment.
Figure 4 is a cross-sectional view schematically showing the fuel cell vehicle according to the embodiment in a state of being taken along a line W-W in Figure 1.
Figure 5 is a cross-sectional view schematically showing the fuel cell vehicle according to the embodiment in a state of being taken along a line X-X in Figure 1.
Figure 6 is a cross-sectional view schematically showing the fuel cell vehicle according to the embodiment in a state of being taken along a line Y-Y in Figure 3.
Figure 7 is a cross-sectional view schematically showing the fuel cell vehicle according to the embodiment in a state of being taken along a line Z-Z in Figure 3.

### Mode for Carrying Out the Invention

A fuel cell vehicle according to an embodiment will be described below. The fuel cell vehicle according to the present embodiment is a fuel cell type vehicle for a single-seater type. In particular, the fuel cell vehicle may be a fuel cell type mobility vehicle for a single-seater type.

However, the fuel cell vehicle is not limited to the above-described vehicle. For example, the fuel cell vehicle may be a fuel cell type vehicle for a double-seater type. In particular, the fuel cell vehicle may be a fuel cell type mobility vehicle for a double-seater type. In this case, two passengers preferably ride in the fuel cell vehicle side by side in a vehicle width direction.

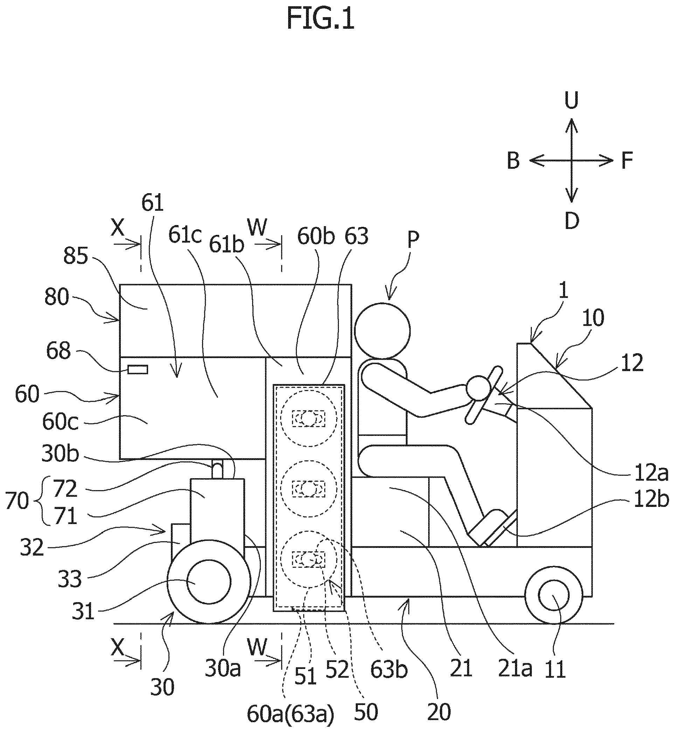

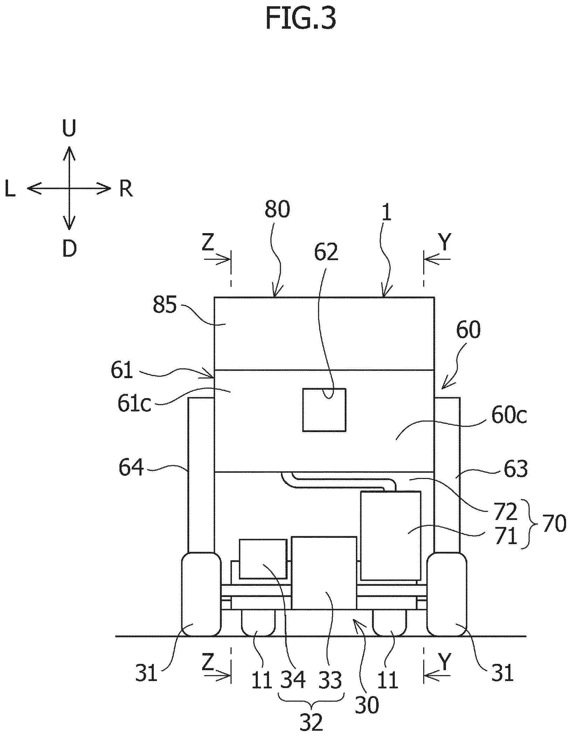

In Figures 1 to 7 used for the description, directions based on the fuel cell vehicle (hereinafter, simply referred to as a "vehicle" as necessary) are indicated as follows. In Figures 1, 2, 6, and 7, a front side and a rear side of the vehicle are indicated by a one-headed arrow F and a one-headed arrow B, respectively. In Figures 3 to 5, a left side and a right side when viewed in the front side direction of the vehicle are indicated by a one-headed arrow L and a one-headed arrow R, respectively. A vehicle width direction is indicated by a one-headed arrow L and a one-headed arrow R. Furthermore, in Figures 1 to 7, an upper side and a lower side of the vehicle are indicated by a one-headed arrow U and a one-headed arrow D, respectively. In the following description, directions simply referred to as "front side", "rear side", "left side", "right side", "upper side", "lower side", "front-rear direction", "width direction", and "up-down direction" indicate directions based on the vehicle.

### Outline of Fuel Cell Vehicle

An outline of the fuel cell vehicle according to the present embodiment will be described with reference to Figures 1 to 7. In other words, the fuel cell vehicle according to the present embodiment is schematically configured as follows. As shown in Figures 1 to 7, a fuel cell vehicle includes a vehicle body 1.

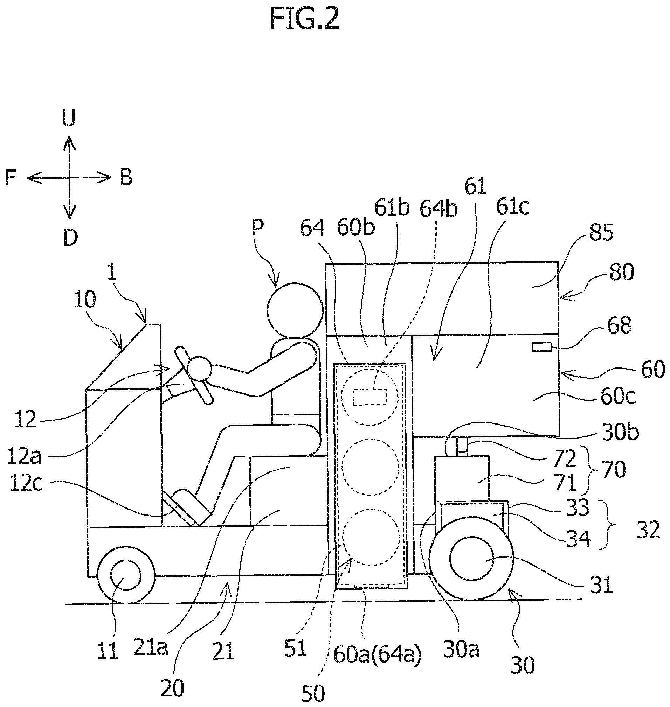

Referring to Figures 1 and 2, the fuel cell vehicle includes an operating part 10 including a front wheel 11 closer to the front side and an operating device 12 used for a running operation. The fuel cell vehicle includes a riding part 20 configured to enable a passenger P to ride. The riding part 20 is located closer to the rear side from the operating part 10.

Referring to Figures 1 to 3, the fuel cell vehicle includes a drive part 30 located closer to the rear side from the riding part 20. The drive part 30 includes a rear wheel 31 located closer to the rear side from the front wheel 11. The drive part 30 includes a drive device 32 used for driving the vehicle to run. The drive device 32 includes a motor 33 configured to drive and move the rear wheel 31. The drive device 32 includes a motor control device 34 configured to be able to control the motor 33.

Referring to Figures 1 to 7, the fuel cell vehicle includes a fuel cell unit 40 configured to be capable of generating electric power used to drive the motor 33. The fuel cell vehicle includes a fuel tank 50 configured to be capable of storing fuel used to generate electric power in the fuel cell unit 40. The fuel cell vehicle includes a compartment 60 that mounts the fuel cell unit 40 and the fuel tank 50. The compartment 60 is defined by a housing 61.

Referring to Figures 1, 2, 4, and 6 to 7, the fuel cell vehicle includes a plurality of fuel tanks 50. In these drawings, as an example, a fuel cell vehicle including three fuel tanks 50 is shown. However, the fuel cell vehicle may include two fuel tanks, or four or more fuel tanks.

As shown in Figures 1, 2, 6, and 7, the drive part 30 includes a front edge region 30a located closer to the front side and an upper edge region 30b located closer to the upper side. The compartment 60 is disposed outside the drive part 30 along the front edge and upper edge regions 30a and 30b of the drive part 30.

Referring to Figures 1, 2, and 4, the compartment 60 includes an air inlet port 60a configured to allow air to flow thereinto. The air inlet port 60a is disposed at a lower end of the compartment 60. Referring to Figures 3 and 5 to 7, the compartment 60 includes an exhaust port 62 configured to be able to discharge gas existing therein to the outside of the compartment 60. The exhaust port 62 is disposed at a rear end of the compartment 60 located closer to the rear side from the drive part 30.

Furthermore, the fuel cell vehicle according to the present embodiment can be schematically configured as follows. Referring to Figures 1, 2, 4, 6, and 7, the compartment 60 includes a tank compartment 60b disposed along the front edge region 30a of the drive part 30. The tank compartment 60b of the compartment 60 is located closer to the front side from the drive device 32. The tank compartment 60b mounts the fuel tank 50. As shown in Figures 1, 2, and 4, the air inlet port 60a is disposed at a lower end of the tank compartment 60b of the compartment 60.

Referring to Figures 1 to 3 and 5 to 7, the compartment 60 includes a fuel cell compartment 60c disposed along the upper edge region 30b of the drive part 30 toward the rear side from the upper end of the tank compartment 60b. The fuel cell compartment 60c mounts the fuel cell unit 40. As shown in Figures 3 and 5 to 7, the exhaust port 62 is disposed at a rear end of the fuel cell compartment 60c of the compartment 60 located closer to the rear side from the drive part 30.

Referring to Figures 1 to 3, and 5 to 7, the fuel cell unit 40 includes a fuel cell stack 41 configured to be capable of generating electric power used to drive the motor 33. The fuel cell vehicle includes a drain tank 71 configured to be capable of storing water produced in the fuel cell stack 41. The fuel cell vehicle also includes a drain pipe 72 extending between the fuel cell stack 41 and the drain tank 71 such that the water produced in the fuel cell stack 41 is sent to the drain tank 71. The drive part 30 includes the drain tank 71.

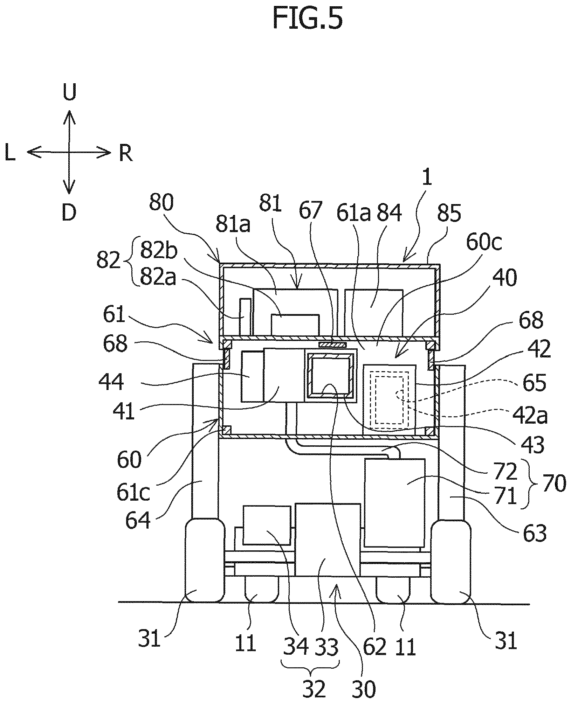

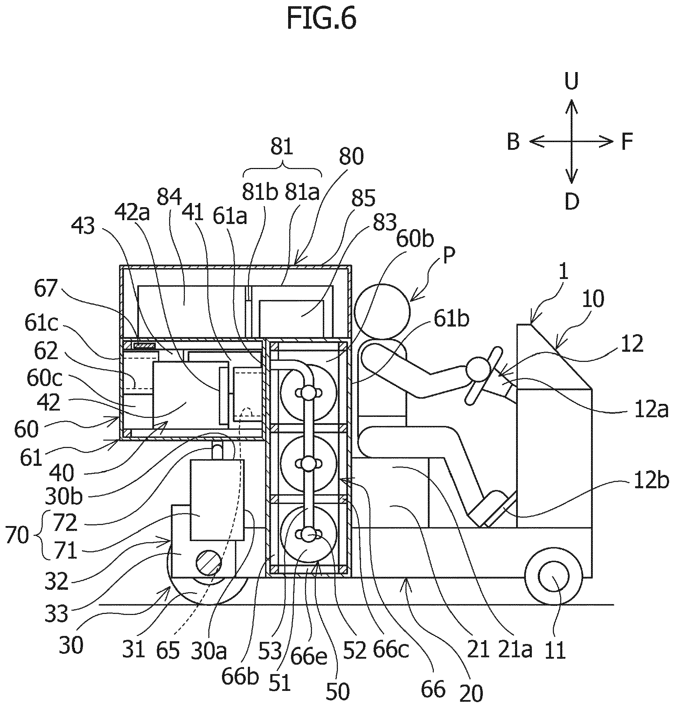

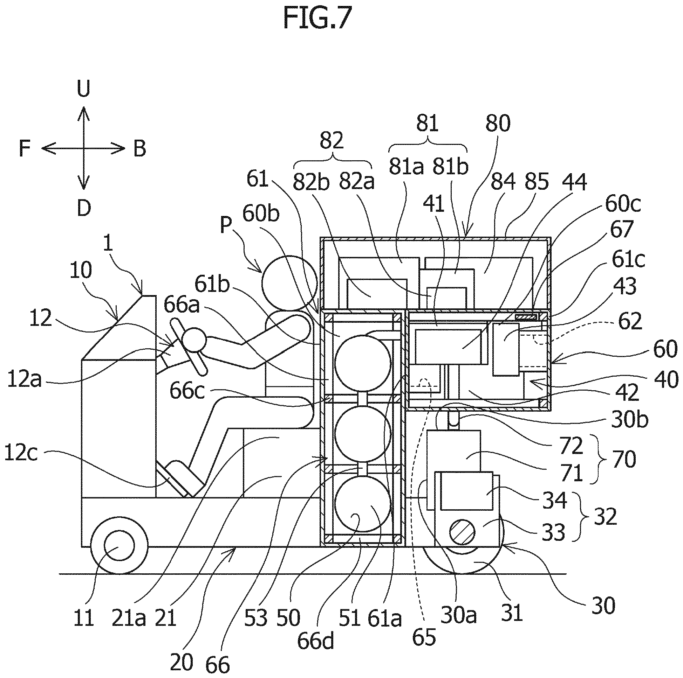

As shown in Figures 6 and 7, the fuel cell stack 41 of the fuel cell unit 40 is disposed in the upper portion of the fuel cell compartment 60c located closer to the upper side. As shown in Figures 3 and 5, the drain tank 71 is located on one side of the drive device 32 in the width direction. The drain tank 71 is located on one side of the motor 33 of the drive device 32 in the width direction. The motor control device 34 of the drive device 32 is located on the other side of the motor 33 of the drive device 32 in the width direction.

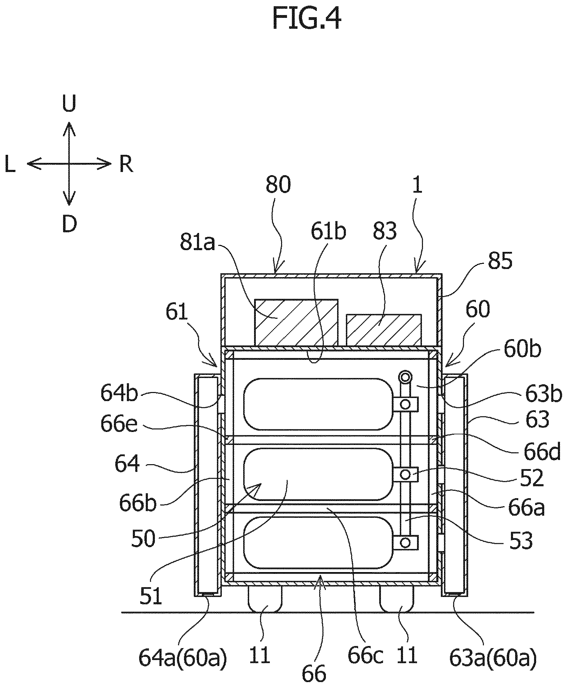

Referring to Figures 4 to 7, the fuel cell vehicle includes a secondary cell unit 81 configured to be able to be charged with the electric power generated by the fuel cell unit 40 and to supply the electric power to the motor 33. The fuel cell vehicle includes an electric power adjusting unit 82 configured to be able to adjust the electric power to be supplied from the secondary cell unit 81 to the motor 33.

The secondary cell unit 81 and the electric power adjusting unit 82 are disposed outside the compartment 60 and above the compartment 60. Furthermore, the secondary cell unit 81 is disposed closer to the front side from the electric power adjusting unit 82.

### Details of Fuel Cell Vehicle

Referring to Figures 1 to 7, the fuel cell vehicle according to the present embodiment can be configured as follows in detail. As shown in Figures 1 to 3 and 5 to 7, the fuel cell vehicle includes a drain mechanism 70 configured to drain the water produced in the fuel cell stack 41 of the fuel cell unit 40. The drain mechanism 70 includes the drain tank 71 and the drain pipe 72.

Referring to Figures 1 to 7, the fuel cell vehicle includes an electric power control part 80 located outside the compartment 60 and above the compartment 60. The secondary cell unit 81 and the electric power adjusting unit 82 are placed on the housing 61 of the compartment 60 in the electric power control part 80.

The operating part 10 includes two front wheels 11 spaced apart from each other in the width direction. In particular, referring to Figures 1 and 2, the operating device 12 includes a steering unit 12a configured to be able to steer at least two front wheels 11. The steering unit 12a is configured to be steerable by a hand of the passenger P on the riding part 20.

For example, the steering unit 12a may be a steering wheel. However, the steering unit is not limited to a steering wheel. For example, the steering unit may be a steering wheel having two grips spaced apart from each other in the vehicle width direction.

In particular, referring to Figure 1, the operating device 12 includes an accelerator 12b used to adjust a running speed of the vehicle. The accelerator 12b is configured to be operable by a foot of the passenger P on the riding part 20. In particular, referring to Figure 2, the operating device 12 includes a brake 12c used for braking the vehicle. The brake 12c is configured to be operable by a foot of the passenger P on the riding part 20.

In particular, referring to Figures 1 and 2, the riding part 20 includes a seat 21 configured such that the passenger P can be seated. The seat 21 includes a seat cushion 21a that supports buttocks of the passenger P. A space is formed between the operating part 10 and the seat 21 of the riding part 20. A height of the seat cushion 21a is set such that the operating device 12 can be operated in a state in which the passenger P is seated on the seat cushion 21a. The seat 21 is adjacent to the housing 61 of the compartment 60 in the vehicle front-rear direction.

### Details of Drive Part

Referring to Figures 1 to 3 and 5 to 7, the drive part 30 can be configured in detail as follows. The drive part 30 includes two rear wheels 31 spaced apart from each other in the width direction. The motor 33 is connected to the two rear wheels 31 to be able to drive the two rear wheels 31. The motor 33, the motor control device 34, and the drain tank 71 are disposed between the two rear wheels 31 in the width direction.

As shown in Figures 1, 2, 6, and 7, the front edge region 30a of the drive part 30 is defined along a front edge of the drive part 30 located at the frontmost side in the drive part 30 as viewed in the width direction. The upper edge region 30b of the drive part 30 is defined along an upper edge of the drive part 30 located at the uppermost side in the drive part 30 as viewed in the width direction.

### Details of Fuel Cell Unit

Referring to Figures 5 to 7, the fuel cell unit 40 can be configured in detail as follows. In the fuel cell unit 40, the fuel cell stack 41 generates electric power using fuel supplied from the fuel tank 50.

The fuel cell unit 40 includes the compressor 42 configured to be able to send compressed air to the fuel cell stack 41. The air sent from the compressor 42 to the fuel cell stack 41 is used for generation of electric power in the fuel cell stack 41. The compressor 42 includes the air intake port 42a configured to take air therein. The air intake port 42a is opened forward such that air can be taken into the compressor 42 from the front side to the rear side. The compressor 42 is located on one side of the fuel cell stack 41 in the width direction.

The fuel cell unit 40 includes an exhaust fan 43 configured to send the gas discharged from the fuel cell stack 41 from the fuel cell stack 41 toward the exhaust port 62 in order to discharge the gas to the outside of the compartment 60. The exhaust fan 43 is located on the other side of the compressor 42 in the width direction. The exhaust fan 43 is located rearward of the fuel cell stack 41.

The fuel cell unit 40 includes a power supply circuit 44 configured to be able to draw the electric power generated by the fuel cell stack 41. The power supply circuit 44 is located on the other side of the exhaust fan 43 in the width direction. The electric power drawn by the power supply circuit 44 is supplied to the motor 33 to operate the motor 33 or an auxiliary machine, or is sent to a drive cell 81a or an auxiliary cell 81b to charge the drive cell 81a or the auxiliary cell 81b of the secondary cell unit 81.

Here, the auxiliary machine may be an electric device other than the motor 33. Examples of the auxiliary machines may include electrical machines, for example, the motor control device 34, the compressor 42, the exhaust fan 43, a ventilation hole 68 to be described below, a secondary cell control device 83, a multi-control device 84, and other in-vehicle electrical components.

### Details of Fuel Tank

Referring to Figures 1, 2, 4, 6, and 7, the fuel tank 50 can be configured in detail as follows. The fuel tank 50 includes a container 51 configured to store the fuel. The fuel tank 50 also includes a Shut-off valve 52 attached to a neck of the container 51. The Shut-off valve 52 is configured to be able to open and close a flow of fuel between the inside and the outside of the container 51. Such a fuel tank 50 may be a portable high-pressure container.

In the plurality of fuel tanks 50, the amount of opening and closing of the Shut-off valve 52 can be adjusted. The plurality of fuel tanks 50 are disposed such that the Shut-off valve 52 is directed to one side in a width direction in the tank compartment 60b of the compartment 60. The Shut-off valves 52 of the plurality of fuel tanks 50 face the same side in the width direction. The compressor 42 described above is located on a side of the fuel cell stack 41 facing the Shut-off valve 52 in the width direction.

The plurality of fuel tanks 50 are aligned in an up-down direction. The Shut-off valves 52 of the plurality of fuel tanks 50 are aligned in the up-down direction. The Shut-off valves 52 of the plurality of fuel tanks 50 are aligned on a vertical line. As shown in Figures 4 and 6, the fuel cell vehicle includes a fuel supply pipe 53 extending such that the fuel flowing out of the Shut-off valves 52 of the plurality of fuel tanks 50 can be sent toward the fuel cell stack 41. The fuel supply pipe 53 is connected to the Shut-off valves 52 of the plurality of fuel tanks 50 and the fuel cell stack 41. A flow rate of the fuel passing through the fuel supply pipe 53 can be adjusted.

### Details of Compartment

Referring to Figures 1 to 7, the compartment 60 can be configured in detail as follows. As shown in Figures 1, 2, 6, and 7, the tank compartment 60b of the compartment 60 is located between the riding part 20 and the drive part 30 in the front-rear direction. The fuel cell compartment 60c of the compartment 60 is located closer to the rear side from the tank compartment 60b. The fuel cell compartment 60c of the compartment 60 is located above the drive part 30. The fuel cell compartment 60c is located closer to the upper side from the drive device 32. The tank compartment 60b and the fuel cell compartment 60c are adjacent to each other in the front-rear direction.

Referring to Figures 1 to 7, the housing 61 of the compartment 60 includes an intermediate housing part 61a that partitions the tank compartment 60b and the fuel cell compartment 60c from each other. The housing 61 includes a tank-side housing part 61b that defines the tank compartment 60b together with the intermediate housing part 61a. The housing 61 includes a fuel cell-side housing part 61c that defines the fuel cell compartment 60c together with the intermediate housing part 61a.

Referring to Figures 1 to 5, the compartment 60 includes air inlet ducts 63 and 64 configured to be able to allow air to flow thereinto. The compartment 60 includes two air inlet ducts 63 and 64 spaced apart from each other in the width direction. The two air inlet ducts 63 and 64 are located on both sides of the tank compartment 60b of the compartment 60 in the width direction, and are adjacent to the tank compartment 60b in the width direction. The compartment 60 includes at least one venting port 63b and 64b formed to vent (communicate) each of the air inlet ducts 63 and 64 with the tank compartment 60b.

Each of the air inlet ducts 63 and 64 extends from the lower side to the upper side. Each of the air inlet ducts 63 and 64 can extend in the vertical direction. In the following description, as necessary, the air inlet duct 63 of the two air inlet ducts 63 and 64 on one side in the width direction is referred to as a first air inlet duct 63, and the air inlet duct 64 of the two air inlet ducts on the other side in the width direction is referred to as a second air inlet duct 64.

Referring to Figures 1 and 4, the first air inlet duct 63 is located closer to one side in the width direction from the Shut-off valves 52 of the plurality of fuel tanks 50. The first air inlet duct 63 is overlapped on these Shut-off valves 52 as viewed in the width direction. The first air inlet duct 63 extends from the lower side toward the upper side along the Shut-off valves 52 of the plurality of fuel tanks 50 aligned in the up-down direction.

The first air inlet duct 63 includes an air inlet port 63a configured to be able to allow air to flow thereinto. The air inlet port 63a is disposed at a lower end of the first air inlet duct 63. The air inlet port 63a corresponds to the air inlet port 60a of the compartment 60 described above. The air inlet port 63a is opened downward. However, the air inlet port can also be opened forward, rearward, or outward in the width direction.

The compartment 60 includes a plurality of venting ports 63b through which the first air inlet duct 63 and the tank compartment 60b vent (communicate) with each other. However, the compartment may include one venting port formed to vent the first air inlet duct with the tank compartment. In this case, one venting port may be disposed to correspond to the fuel tank located at the lowermost side among the plurality of fuel tanks.

The number of the plurality of venting ports 63b corresponds to the number of the plurality of fuel tanks 50. One of the plurality of venting ports 63b is disposed to correspond to the fuel tank 50 located at the lowermost side among the plurality of fuel tanks 50. The plurality of venting ports 63b are disposed to face the Shut-off valves 52 of the plurality of fuel tanks 50, respectively.

Referring to Figures 2 and 4, the second air inlet duct 64 is located closer to the other side in the width direction from the plurality of fuel tanks 50. The second air inlet duct 64 extends from the lower side to the upper side along the plurality of fuel tanks 50 aligned in the up-down direction. The second air inlet duct 64 can be formed substantially symmetrically with the first air inlet duct 63 in the width direction.

The second air inlet duct 64 includes an air inlet port 64a configured to be able to allow air to flow thereinto. The air inlet port 64a is disposed at a lower end of the second air inlet duct 64. The air inlet port 64a also corresponds to the air inlet port 60a of the compartment 60 described above. The air inlet port 64a is opened downward. However, the air inlet port can also be opened forward, rearward, or outward in the width direction.

The compartment 60 includes one venting port 64b formed to vent (communicate) the second air inlet duct 64 with the tank compartment 60b. However, the compartment may include a plurality of venting ports formed to vent the second air inlet duct with the tank compartment. In this case, each of the plurality of venting ports may be disposed to face each of the plurality of fuel tanks.

One venting port 64b is disposed to correspond to the fuel tank 50 located on the uppermost side among the plurality of fuel tanks 50. However, one venting port may be disposed to correspond to the fuel tank other than the fuel tank located on the uppermost side among the plurality of fuel tanks. For example, one venting port may be disposed to correspond to the fuel tank located on the lowermost side among the plurality of fuel tanks.

As shown in Figure 6, the compartment 60 includes the connection port 65 that is opened to connect the tank compartment 60b and the fuel cell compartment 60c. The connection port 65 is directed rearward to face the air intake port 42a of the compressor 42 of the fuel cell unit 40. An upper end of the connection port 65 is located above the lower end of the air intake port 42a.

The connection port 65 is formed to penetrate the intermediate housing part 61a. A peripheral edge of the connection port 65 can be formed to protrude toward the air intake port 42a from the intermediate housing part 61a. The connection port 65 is disposed to be overlapped on the air intake port 42a as viewed in the front-rear direction. The connection port 65 can be disposed to be overlapped on the air intake port 42a as viewed in the front-rear direction as a whole.

Referring to Figures 3, 5, and 7, the exhaust port 62 is formed to penetrate a rear end of the fuel cell-side housing part 61c in the front-rear direction. The exhaust port 62 is disposed behind the exhaust fan 43 of the fuel cell unit 40. The exhaust port 62 faces the exhaust fan 43 in the front-rear direction.

A peripheral edge of the exhaust port 62 can be formed to protrude toward the exhaust fan 43 from the rear end of the fuel cell-side housing part 61c. The exhaust port 62 is disposed to be overlapped on the exhaust fan 43 as viewed in the front-rear direction. The exhaust port 62 can be disposed to be overlapped on the exhaust fan 43 as viewed in the front-rear direction as a whole.

Referring to Figures 4, 6, and 7, the compartment 60 includes a frame assembly 66 disposed to surround the plurality of fuel tanks 50. The frame assembly 66 includes a plurality of longitudinal frames 66a and 66b disposed in the up-down direction. Each of the longitudinal frames 66a and 66b is formed in an elongated shape. The frame assembly 66 includes a plurality of lateral frames 66c, 66d, and 66e disposed in a horizontal direction. Each of the lateral frames 66c, 66d, and 66e is formed in an elongated shape.

The frame assembly 66 is disposed in the tank compartment 60b. The intermediate housing part 61a and the tank-side housing part 61b of the housing 61 are supported by the frame assembly 66. The intermediate housing part 61a and the tank-side housing part 61b of the housing 61 are also attached to the frame assembly 66.

The plurality of longitudinal frames 66a and 66b include at least one first longitudinal frame 66a located at one end in the width direction of the frame assembly 66. The plurality of longitudinal frames 66a and 66b include at least one second longitudinal frame 66b located at the other end in the width direction of the frame assembly 66. The first and second longitudinal frames 66a and 66b are spaced apart from each other in the width direction.

The first longitudinal frame 66a is located on the side facing the Shut-off valve 52 in the width direction. The first longitudinal frame 66a is located between the Shut-off valve 52 of the fuel tank 50 and the first air inlet duct 63 as viewed in the front-rear direction. The frame assembly 66 may include two first longitudinal frames 66a spaced apart from each other in the front-rear direction. The second longitudinal frame 66b is located between the container 51 of the fuel tank 50 and the second air inlet duct 64 as viewed in the front-rear direction. The frame assembly 66 may include two second longitudinal frames 66b spaced apart from each other in the front-rear direction.

The plurality of lateral frames 66c, 66d, and 66e include a plurality of first lateral frames 66c connecting the first and second longitudinal frames 66a and 66b facing each other in the width direction. Each of the first lateral frames 66c is disposed in the width direction. The plurality of first lateral frames 66c are spaced apart from each other in the up-down direction.

The plurality of lateral frames 66c, 66d, and 66e include a plurality of second lateral frames 66d connecting the two first longitudinal frames 66a. Each of the second lateral frames 66d is disposed in the front-rear direction. The plurality of lateral frames 66c, 66d, and 66e include a plurality of third lateral frames 66e connecting the two second longitudinal frames 66b. Each of the third lateral frames 66e is disposed in the front-rear direction.

Referring to Figures 1, 2, 4, 6, and 7, the first air inlet duct 63 is supported by the first longitudinal frame 66a. However, the first air inlet duct 63 may also be supported by the second lateral frame 66d instead of the first longitudinal frame 66a or in addition to the first longitudinal frame 66a. The second air inlet duct 64 is supported by the second longitudinal frame 66b. However, the second air inlet duct 64 may also be supported by the third lateral frame 66e instead of the second longitudinal frame 66b or in addition to the second longitudinal frame 66b.

Referring to Figures 6 and 7, the compartment 60 includes a fuel leakage detecting part 67 configured to be able to detect the fuel therein flowing out. The fuel leakage detecting part 67 is disposed in the fuel cell compartment 60c. In particular, the fuel leakage detecting part 67 can be disposed at an upper end and a rear end of the fuel cell compartment 60c.

Referring to Figures 1 to 3 and 5, the compartment 60 includes the ventilation hole 68 configured to allow the fuel therein flowing out to be discharged to the outside of the compartment 60. The ventilation hole 68 is configured to be openable and closable. The amount of opening and closing of the ventilation hole 68 is adjustable.

The ventilation hole 68 is also disposed in the fuel cell compartment 60c. In particular, the ventilation hole 68 can be disposed in the fuel cell-side housing part 61c of the housing 61. Furthermore, the ventilation hole 68 can be disposed at an upper end and a rear end on a lateral surface in the width direction of the fuel cell-side housing part 61c.

The ventilation hole 68 is normally in a closed state. The ventilation hole 68 is opened such that the fuel can be discharged to the outside of the compartment 60 when the fuel leakage detecting part 67 detects the fuel flowing out into the fuel cell compartment 60c.

### Details of Drain Mechanism

Referring to Figure 7, the drain mechanism 70 can be configured in detail as follows. The drain pipe 72 of the drain mechanism 70 extends downward from the fuel cell stack 41. The drain pipe 72 extends such that water generated in the fuel cell stack 41 can be sent from the fuel cell stack 41 to the drain tank 71 by gravity.

The drain pipe 72 includes an upstream end connected to a lower end of the fuel cell stack 41. The drain pipe 72 also includes a downstream end connected to an upper end of the drain tank 71. The drain pipe 72 can be configured as a flexible hose. The drain pipe 72 can be configured to be detachably attached to the drain tank 71.

The drain tank 71 can be configured to be detachably attached to the vehicle body 1. In this case, the water stored in the drain tank 71 can be drained in a state in which the drain tank 71 is removed from the vehicle body 1.

### Details of Electric Power Control Part

Referring to Figures 4 to 7, the electric power control part 80 can be configured in detail as follows. The secondary cell unit 81 of the electric power control part 80 includes the drive cell 81a that is a secondary cell configured as a main power source. The drive cell 81a can also be referred to as a high voltage cell 81a. The secondary cell unit 81 includes the auxiliary cell 81b that is a secondary cell configured as an auxiliary power source. Typically, the auxiliary cell 81b can be configured as a 12 V (volt) cell.

The electric power adjusting unit 82 of the electric power control part 80 includes a drive electric power adjusting unit 82a configured to be able to adjust the electric power of the drive cell 81a. The electric power adjusting unit 82 includes an auxiliary electric power adjusting unit 82b configured to be able to adjust electric power of the auxiliary cell 81b. The drive electric power adjusting unit 82a can be configured as a DC/DC converter ("DC" being an abbreviation for "Direct Current") 82a for the drive cell 81a. The auxiliary electric power adjusting unit 82b can be configured as a DC/DC converter 82b for the auxiliary cell 81b.

The electric power control part 80 includes the secondary cell control device 83 configured to be able to control charging and discharging of the secondary cell unit 81. The secondary cell control device 83 is configured to be able to control the electric power adjusting unit 82 and the drive electric power and auxiliary electric power adjusting units 82a and 82b.

The electric power control part 80 includes the multi-control device 84 configured to be able to execute several types of control, for example, drive control of the vehicle and control of the fuel cell unit 40. The multi-control device 84 is configured to control the vehicle to drive in cooperation with the motor control device 34 and the secondary cell control device 83, based on an instruction from the operating device 12. The multi-control device 84 is configured to be able to control the fuel cell stack 41, the compressor 42, and the exhaust fan 43 of the fuel cell unit 40.

The multi-control device 84 can be configured to be able to control opening and closing of the Shut-off valves 52 in the plurality of fuel tanks 50. The multi-control device 84 is configured to be able to close the Shut-off valve 52 as necessary based on the detection of the fuel leakage detecting part 67.

The electric power control part 80 includes a cover 85 that defines the electric power control part 80 together with the upper end surface of the housing 61 of the compartment 60. The cover 85 is formed to surround the electric power control part 80 from above. The cover 85 is detachably attached to the upper end surface of the housing 61 of the compartment 60.

In a state in which the cover 85 is removed from the upper end surface of the housing 61, it is possible to easily replace the drive cell 81a and the auxiliary cell 81b of the secondary cell unit 81 opened to the outside of the vehicle. In the state in which the cover 85 is removed from the upper end surface of the housing 61, it is possible to easily perform maintenance on the drive cell 81a and the auxiliary cell 81b of the secondary cell unit 81 opened to the outside of the vehicle, the drive electric power adjusting unit 82a and the auxiliary electric power adjusting unit 82b of the electric power adjusting unit 82, the secondary cell control device 83, and the multi-control device 84.

The drive cell 81a is disposed in front of the auxiliary cell 81b. The drive cell 81a is adjacent to the auxiliary cell 81b in the front-rear direction. The drive electric power adjusting unit 82a and the auxiliary electric power adjusting unit 82b are disposed rearward of the auxiliary cell 81b. The drive electric power adjusting unit 82a and the auxiliary electric power adjusting unit 82b are spaced apart from each other in the front-rear direction with respect to the auxiliary cell 81b.

The secondary cell control device 83 is aligned with the secondary cell unit 81 in the width direction. In particular, the secondary cell control device 83 can be aligned with the drive cell 81a of the secondary cell unit 81 in the width direction. The multi-control device 84 is disposed rearward of the secondary cell control device 83. The multi-control device 84 is aligned with the electric power adjusting unit 82 in the width direction. In particular, the multi-control device 84 can be aligned with the drive electric power adjusting unit 82a and the auxiliary electric power adjusting unit 82b of the electric power adjusting unit 82 in the width direction.

### Function of Fuel Cell Vehicle

The fuel cell vehicle according to the present embodiment can perform the following functions. Here, as an example, a case will be described in which hydrogen fuel is used for a fuel cell vehicle. In the fuel cell vehicle, the compartment 60 mounts a mechanism for supplying hydrogen fuel from the fuel tank 50 to the fuel cell unit 40 and a mechanism for generating power using the fuel cell unit 40.

The air inlet ducts 63 and 64 are disposed on left and right sides of the tank compartment 60b in the width direction of the compartment 60, respectively. The air inlet ducts 63 and 64 includes the air inlet ports 63a and 64a formed to be opened at the lower ends thereof, respectively. In the air inlet ducts 63 and 64, air goes upward from the air inlet ports 63a and 64a, and then enters the compartment 60 through the venting ports 63b and 64b. The fuel cell unit 40 generates power using the air which has entered the compartment 60 in this way. For this reason, the air inlet ducts 63 and 64 play a role of supplying air necessary for power generation of the fuel cell unit 40.

With respect to the shape of the air inlet ducts 63 and 64, the air inlet ducts 63 and 64 extend upward from the lower side. Therefore, even when foreign matter such as dust or dirt are mixed with the air during intake of air from the air inlet ports 63a and 64a formed at the lower ends of the air inlet ducts 63 and 64, the foreign matter can fall by the weight of the foreign matter before the foreign matter reaches the venting ports 63b and 64b. In the compartment 60, the air supplied to the fuel cell unit 40 is sent from the compressor 42 to the fuel cell stack 41 as air for reaction with hydrogen, and then the air is taken in from the front surface of the fuel cell stack 41 for the purpose of cooling the fuel cell stack 41 itself and further flows to be discharged from the exhaust port 62 by the exhaust fan 43 after the reaction or after cooling.

Normally, the inside of the compartment 60 is in a state of weak negative pressure when the fuel cell unit 40 is operated, whereas the inside of the compartment 60 is in a state of normal pressure when the fuel cell unit 40 is stopped. Such a compartment 60 mounts the pipe such as the fuel supply pipe 53 located around the fuel tank 50. When hydrogen leakage occurs from such a pipe during the operation of the fuel cell vehicle and exceeds the hydrogen concentration determined by the fuel leakage detecting part 67, the fuel cell vehicle functions to close the Shut-off valve 52 of the fuel tank 50 and to stop the operation of the fuel cell unit 40.

After the fuel cell unit 40 is stopped, the hydrogen in the compartment 60 is gathered higher, and can be naturally discharged from the ventilation hole 68 to the outside of the compartment 60. A ceiling surface of the compartment 60 may be preferably formed to be higher from the front side to the rear side, and the ventilation hole 68 may be located in the vicinity of a rear end of the ceiling surface of the compartment 60 which is highest. The fuel leakage detecting part 67 may be disposed in the compartment 60 at a place where hydrogen can be easily detected. One fuel leakage detecting part 67 or a plurality of fuel leakage detecting parts 67 may be disposed in the compartment 60. The fuel leakage detecting part 67 is also disposed near the ventilation hole 68 to effectively detect hydrogen.

As described above, the fuel cell vehicle according to the present embodiment includes: the operating part 10 including the front wheel 11 located closer to the front side and the operating device 12 used for the running operation; the riding part 20 configured to be able to allow the passenger P to ride in and located closer to the rear side from the operating part 10; the drive part 30 including the rear wheel 31 located closer to the rear side from the front wheel 11, and the drive device 32, the drive device 32 including the motor 33 configured to be able to drive the rear wheel 31, and the motor control device 34 configured to be able to control the motor 33, the drive part 30 being located closer to the rear side from the riding part 20; the fuel cell unit 40 configured to be able to generate the electric power used to drive the motor 33; and the fuel tank 50 configured to be able to store the fuel used for the electric power generation in the fuel cell unit 40, wherein the fuel cell vehicle includes the compartment 60 for mounting the fuel cell unit 40 and the fuel tank 50, the compartment 60 being defined by the housing 61, the drive part 30 includes the front edge region 30a located closer to the front side and the upper edge region 30b located closer to the upper side, the compartment 60 is disposed along the front edge and upper edge regions 30a and 30b of the drive part 30 at the outside of the drive part 30, the compartment 60 includes the air inlet port 60a configured to be able to allow air to flow thereinto and the exhaust port 62 configured to be able to discharge the gas existing in the compartment 60 to the outside of the compartment 60, the air inlet port 60a is disposed at the lower end of the compartment 60, and the exhaust port 62 is disposed at the rear end of the compartment 60 located closer to the rear side from the drive part 30.

In such a fuel cell vehicle, the fuel cell unit 40 and the fuel tank 50 are separated from the motor 33 and the motor control device 34 by the housing 61 of the compartment 60. As a result, it is possible to prevent fuel such as hydrogen in the fuel cell unit 40 and the fuel tank 50 from coming into contact with electrical systems, for example, the motor 33 and the motor control device 34. Therefore, the fuel cell vehicle can be safely improved.

In particular, during the driving of the vehicle, the air passes through the inside of the compartment 60 located around the drive part 30 from the air inlet port 60a located at the lower end of the compartment 60, and flows to reach the exhaust port 62 located at the rear end of the compartment 60. As a result, it is possible to efficiently cool the fuel cell unit 40 in the compartment 60 with the air flowing into the inside of the compartment 60 in this way. Due to the temperature drop of the compartment 60, it is also possible to cool the motor 33 and the motor control device 34 of the drive part 30 adjacent to the compartment 60. Therefore, it is possible to prevent performance deterioration of the fuel cell vehicle due to temperature increase.

In addition, the compartment 60 is disposed along the front edge and upper edge regions 30a and 30b of the drive part 30 so as to efficiently utilize a dead space around the drive part 30. As a result, the fuel cell unit 40, the fuel tank 50, the motor 33, and the motor control device 34 can be disposed to be integrated in and around the drive part 30. Therefore, the size of the fuel cell vehicle can be reduced.

In the fuel cell vehicle according to the present embodiment, the compartment 60 includes the tank compartment 60b disposed along the front edge region 30a of the drive part 30 and the fuel cell compartment 60c disposed along the upper edge region 30b of the drive part 30 from the upper end of the tank compartment 60b toward the rear side, the tank compartment 60b of the compartment 60 is located closer to the front side from the drive device 32 and mounts the fuel tank 50, the fuel cell compartment 60c of the compartment 60 is located closer to the upper side from the drive device 32 and mounts the fuel cell unit 40, the air inlet port 60a is disposed at the lower end of the tank compartment 60b of the compartment 60, and the exhaust port 62 is disposed at the rear end of the fuel cell compartment 60c of the compartment 60 located closer to the rear side from the drive part 30.

In such a fuel cell vehicle, the air inlet port 60a and the exhaust port 62 of the compartment 60 can be sufficiently separated from each other. As a result, it is possible to prevent the air discharged from the exhaust port 62 in a state of being heated by the fuel cell unit 40 or the like from being taken into the inside of the compartment 60 again from the air inlet port 60a. Therefore, it is possible to efficiently cool the fuel cell unit 40 in the compartment 60, and to prevent performance deterioration of the fuel cell vehicle due to temperature increase. Since the fuel cell unit 40 and the fuel tank 50 can be efficiently disposed inside the compartment 60 and the motor 33 and the motor control device 34 can be efficiently disposed in the drive part 30 located outside the compartment 60, the size of the fuel cell vehicle can be reduced.

In the fuel cell vehicle according to the present embodiment, the fuel cell vehicle includes the drain tank 71 configured to be capable of storing water produced in the fuel cell stack 41 of fuel cell unit 40 and the drain pipe 72 extending between the fuel cell stack 41 and the drain tank 71 such that the water produced in the fuel cell stack 41 is sent to the drain tank 71, the drive part 30 includes the drain tank 71, the drain tank 71 is located on one side in the width direction of the drive device 32 in the drive part 30, and the fuel cell stack 41 is disposed in the upper portion of the fuel cell compartment 60c located closer to the upper side.

In such a fuel cell vehicle, since the drain tank 71, which tends to be large, can be efficiently disposed so as to efficiently utilize the dead space in the drive part 30, the size of the fuel cell vehicle can be reduced. Since the drain tank 71 is disposed below the fuel cell stack 41, the water produced in the fuel cell stack 41 can be efficiently sent to the drain tank 71 while passing through the drain pipe 72 using gravity.

Furthermore, since the fuel cell stack 41 is disposed closer to the upper side of the fuel cell compartment 60c of the compartment 60, a distance in the up-down direction between the fuel cell stack 41 and the drain tank 71 is sufficiently maintained, and a water path from the fuel cell stack 41 toward the drain tank 71 can be efficiently routed.

In the fuel cell vehicle according to the present embodiment, the drain tank 71 is located on one side of the motor 33 of the drive device 32 in the width direction, and the motor control device 34 of the drive device 32 is located on the other side of the motor 33 of the drive device 32 in the width direction.

In such a fuel cell vehicle, waterproof performance of the motor control device 34 tends to be lower than waterproof performance of the motor 33. On the other hand, since the motor control device 34 is disposed to be separated from the drain tank 71 by the motor 33, the water in the drain tank 71 can be prevented from coming into contact with the motor control device 34. For example, even when water is produced due to dew condensation or the like and the water is delivered through the drain pipe 72 such as a hose, the motor control device 34 can be prevented from being splashed with the water. Therefore, the fuel cell vehicle can have improved safety, and performance deterioration of the fuel cell vehicle can be prevented.

In the fuel cell vehicle according to the present embodiment, the fuel cell vehicle includes the secondary cell unit 81 configured to be able to be charged with the electric power generated by the fuel cell unit 40 and to supply the electric power to the motor 33 and the electric power adjusting unit 82 configured to be able to adjust the electric power to be supplied from the secondary cell unit 81 to the motor 33, and the secondary cell unit 81 and the electric power adjusting unit 82 are disposed outside the compartment 60 and above the compartment 60.

In such a fuel cell vehicle, a maintenance frequency of the secondary cell unit 81 such as replacement of the secondary cell unit 81 and a maintenance frequency of the electric power adjusting unit 82 related to the secondary cell unit 81 are higher than maintenance frequencies of other components. On the other hand, since the secondary cell unit 81 and the electric power adjusting unit 82 are disposed outside the compartment 60 and above the compartment 60, it is possible to facilitate the maintenance of the secondary cell unit 81 and the electric power adjusting unit 82, and accordingly to prevent mistakes in maintenance of the secondary cell unit 81 and the electric power adjusting unit 82, which are frequently performed.

For example, the electric power adjusting unit 82 can be kept away as far as possible from the exhaust port 62 even in a limited space. Furthermore, since the fuel cell unit 40 of which the temperature tends to increase is isolated from the secondary cell unit 81 of which the temperature tends to increase similarly by the compartment 60, it is possible to prevent the temperature of the fuel cell unit 40 and the secondary cell unit 81 from rising synergistically. Therefore, the fuel cell vehicle can be of improved safety, and performance deterioration of the fuel cell vehicle can be prevented.

In the fuel cell vehicle according to the present embodiment, the secondary cell unit 81 is disposed closer to the front side from the electric power adjusting unit 82.

In such a fuel cell vehicle, the secondary cell unit 81 is farther away from the exhaust port 62 than the electric power adjusting unit 82. Therefore, even when the fuel leaks in the compartment 60, the leaked fuel hardly flows to the secondary cell unit 81 compared with the electric power adjusting unit 82, and as a result, the fuel can be prevented from coming into contact with the secondary cell unit 81.

Although the embodiment of the present invention has been described above, the present invention is not limited to the above-described embodiment.

### Reference Signs List

- 10: Operating part,
- 11: Front wheel,
- 12: Operating device
- 20: Riding part
- 30: Drive part,
- 30a: Front edge region,
- 30b: Upper edge region,
- 31: Rear wheel,
- 32: Drive device,
- 33: Motor,
- 34: Motor control device
- 40: Fuel cell unit,
- 41: Fuel cell stack
- 50: Fuel tank
- 60: Compartment,
- 60a: Air inlet port,
- 60b: Tank compartment,
- 60c: Fuel cell compartment,
- 61: Housing,
- 62: Exhaust port
- 71: Drain tank,
- 72: Drain pipe
- 81: Secondary cell unit,
- 82: Electric power adjusting unit
- P: Passenger

## Claims

1. A fuel cell vehicle comprising:
an operating part (10) including a front wheel (11) located closer to a front side of the vehicle and an operating device (12) used for a running operation;
a riding part (20) configured to be able to allow a passenger (P) to ride in and located closer to a rear side of the vehicle from the operating part (10);
a drive part (30) including a rear wheel (31) located closer to the rear side of the vehicle from the front wheel (11), and a drive device (32), the drive device (32) including a motor (33) configured to be able to drive the rear wheel (31), and a motor control device (34) configured to be able to control the motor (33), the drive part (30) being located closer to the rear side of the vehicle from the riding part (20);
a fuel cell unit (40) configured to be able to generate electric power used to drive the motor (33); and
a plurality of fuel tanks (50) configured to be able to store fuel used for electric power generation in the fuel cell unit (40), **characterized in that**
the riding part (20) includes a seat (21) configured such that the passenger (P) can be seated,
the fuel cell vehicle includes a compartment (60) for mounting the fuel cell unit (40) and the fuel tanks (50), the compartment (60) being defined by a housing (61), and the compartment (60) being located closer to the rear side of the vehicle from the seat (21) of the riding part (20),
the drive part (30) includes a front edge region (30a) located closer to the front side of the vehicle and an upper edge region (30b) located closer to an upper side,
the compartment (60) is disposed along the front edge and upper edge regions (30a, 30b) of the drive part (30) at an outside of the drive part (30),
the compartment (60) includes an air inlet port (60a) configured to be able to allow air to flow thereinto and an exhaust port (62) configured to be able to discharge gas existing in the compartment (60) to an outside of the compartment (60),
the air inlet port (60a) is disposed at a lower end of the compartment (60), and
the exhaust port (62) is disposed at a rear end of the compartment (60) located closer to the rear side of the vehicle from the drive part (30).

2. The fuel cell vehicle according to claim 1, wherein
the compartment (60) includes a tank compartment (60b) disposed along the front edge region (30a) of the drive part (30) and a fuel cell compartment (60c) disposed along the upper edge region (30b) of the drive part (30) from an upper end of the tank compartment (60b) toward the rear side of the vehicle,
the tank compartment (60b) of the compartment (60) is located closer to the front side of the vehicle from the drive device (32) and mounts the fuel tanks (50),
the fuel cell compartment (60c) of the compartment (60) is located closer to the upper side from the drive device (32) and mounts the fuel cell unit (40),
the air inlet port (60a) is disposed at a lower end of the tank compartment (60b) of the compartment (60), and
the exhaust port (62) is disposed at a rear end of the fuel cell compartment (60c) of the compartment (60) located closer to the rear side of the vehicle from the drive part (30).

3. The fuel cell vehicle according to claim 1 or 2, wherein
the fuel cell vehicle includes
a drain tank (71) configured to be able to store water produced in a fuel cell stack (41) of the fuel cell unit (40) and
a drain pipe (72) extending between the fuel cell stack (41) and the drain tank (71) such that the water produced in the fuel cell stack (41) is sent to the drain tank (71),
the drive part (30) includes the drain tank (71),
the drain tank (71) is located on one side in a vehicle width direction of the drive device (32) in the drive part (30), and
the fuel cell stack (41) is disposed in an upper portion of the fuel cell compartment (60c) located closer to the upper side.

4. The fuel cell vehicle according to claim 3, wherein
the drain tank (71) is located on one side of the motor (33) of the drive device (32) in the vehicle width direction, and
the motor control device (34) of the drive device (32) is located on the other side of the motor (33) of the drive device (32) in the vehicle width direction.

5. The fuel cell vehicle according to any one of claims 1 to 4, wherein
the fuel cell vehicle includes
a secondary cell unit (81) configured to be able to be charged with the electric power generated by the fuel cell unit (40) and to supply the electric power to the motor (33) and
an electric power adjusting unit (82) configured to be able to adjust the electric power to be supplied from the secondary cell unit (81) to the motor (33), and
the secondary cell unit (81) and the electric power adjusting unit (82) are disposed outside the compartment (60) and above the compartment (60).

6. The fuel cell vehicle according to claim 5, wherein
the secondary cell unit (81) is disposed closer to the front side of the vehicle from the electric power adjusting unit (82).

## Patentansprüche

1. Brennstoffzellenfahrzeug, umfassend:
ein Bedienteil (10), das ein näher an der Vorderseite des Fahrzeugs liegendes Vorderrad (11) und eine Bedienvorrichtung (12) beinhaltet, die für einen Fahrbetrieb verwendet wird;
ein Mitfahrteil (20), das dazu konfiguriert ist, einem Fahrgast (P) das Mitfahren ermöglichen zu können, und das von dem Bedienteil (10) näher an der Rückseite des Fahrzeugs liegt;
ein Antriebsteil (30), das ein Hinterrad (31), das von dem Vorderrad (11) näher an der Rückseite des Fahrzeugs angeordnet ist, und eine Antriebsvorrichtung (32) beinhaltet, wobei die Antriebsvorrichtung (32) einen Motor (33), der dazu konfiguriert ist, das Hinterrad (31) antreiben zu können, und eine Motorsteuervorrichtung (34), die dazu konfiguriert ist, den Motor (33) steuern zu können, beinhaltet, wobei das Antriebsteil (30) von dem Mitfahrteil näher an der Rückseite des Fahrzeugs (20) angeordnet ist;
eine Brennstoffzelleneinheit (40), die dazu konfiguriert ist, elektrische Energie erzeugen zu können, die zum Antreiben des Motors (33) verwendet wird; und
eine Vielzahl von Brennstofftanks (50), die dazu konfiguriert ist, Brennstoff speichern zu können, der zur Stromerzeugung in der Brennstoffzelleneinheit (40) verwendet wird, **dadurch gekennzeichnet, dass**
das Mitfahrteil (20) einen Sitz (21) beinhaltet, der so konfiguriert ist, dass der Fahrgast (P) Platz nehmen kann, das Brennstoffzellenfahrzeug ein Fach (60) zum Montieren der Brennstoffzelleneinheit (40) und der Kraftstofftanks (50) beinhaltet, wobei das Fach (60) durch ein Gehäuse (61) begrenzt ist und das Fach (60) von dem Sitz (21) des Mitfahrteils (20) näher an der Rückseite des Fahrzeugs liegt,
das Antriebsteil (30) einen näher an der Vorderseite des Fahrzeugs angeordneten Vorderkantenbereich (30a) und einen näher an einer Oberseite angeordneten Oberkantenbereich (30b) beinhaltet,
das Fach (60) entlang der Vorderkante und oberen Vorderkantenbereiche (30a, 30b) des Antriebsteils (30) an einer Außenseite des Antriebsteils (30) angeordnet ist,
das Fach (60) eine Lufteinlassöffnung (60a), die dazu konfiguriert ist, Luft dort hineinströmen lassen zu können, und eine Auslassöffnung (62), die dazu konfiguriert ist, im Fach (60) vorhandenes Gas an eine Außenseite des Fachs ableiten zu können (60), beinhaltet,
die Lufteinlassöffnung (60a) an einem unteren Ende des Fachs (60) angeordnet ist, und
die Auslassöffnung (62) an einem hinteren Ende des Fachs (60) angeordnet ist, das vom Antriebsteil (30) näher an der Rückseite des Fahrzeugs liegt.

2. Brennstoffzellenfahrzeug nach Anspruch 1, wobei das Fach (60) ein Tankfach (60b), das entlang des vorderen Randbereichs (30a) des Antriebsteils (30) angeordnet ist, und ein Brennstoffzellenfach (60c), das entlang des oberen Randbereichs (30b) des Antriebsteils (30) von einem oberen Ende des Tankabteils (60b) in Richtung der Rückseite des Fahrzeugs angeordnet ist, beinhaltet,
das Tankfach (60b) des Fachs (60) von der Antriebsvorrichtung (32) näher an der Vorderseite des Fahrzeugs liegt und die Kraftstofftanks (50) montiert,
das Brennstoffzellenfach (60c) des Fachs (60) näher an der Oberseite der Antriebsvorrichtung (32) liegt und die Brennstoffzelleneinheit (40) trägt,
die Lufteinlassöffnung (60a) an einem unteren Ende des Tankfachs (60b) des Fachs (60) angeordnet ist, und
die Auslassöffnung (62) an einem hinteren Ende des Brennstoffzellenabteils (60c) des Abteils (60) angeordnet ist, das von dem Antriebsteil (30) näher an der Rückseite des Fahrzeugs liegt.

3. Brennstoffzellenfahrzeug nach Anspruch 1 oder 2, wobei das Brennstoffzellenfahrzeug Folgendes beinhaltet:
einen Ablauftank (71), der dazu konfiguriert ist, in einem Brennstoffzellenstapel (41) der Brennstoffzelleneinheit (40) erzeugtes Wasser speichern zu können, und
ein Abflussrohr (72), das sich zwischen dem Brennstoffzellenstapel (41) und dem Abflusstank (71) erstreckt, sodass das im Brennstoffzellenstapel (41) erzeugte Wasser zum Abflusstank (71) geleitet wird,
das Antriebsteil (30) den Ablauftank (71) beinhaltet,
der Ablauftank (71) auf einer Seite in Fahrzeugbreitenrichtung der Antriebsvorrichtung (32) in dem Antriebsteil (30) liegt, und der Brennstoffzellenstapel (41) in einem oberen Abschnitt des Brennstoffzellenfachs (60c) angeordnet ist, der näher an der Oberseite liegt.

4. Brennstoffzellenfahrzeug nach Anspruch 3, wobei
der Ablauftank (71) in Fahrzeugbreitenrichtung auf einer Seite des Motors (33) der Antriebsvorrichtung (32) liegt, und
die Motorsteuervorrichtung (34) der Antriebsvorrichtung (32) in Fahrzeugbreitenrichtung auf der anderen Seite des Motors (33) der Antriebseinrichtung (32) liegt.

5. Brennstoffzellenfahrzeug nach einem der Ansprüche 1 bis 4, wobei
das Brennstoffzellenfahrzeug Folgendes beinhaltet:
eine Sekundärzelleneinheit (81), die dazu konfiguriert ist, mit der durch die Brennstoffzelleneinheit (40) erzeugten elektrischen Energie aufgeladen werden zu können und die elektrische Energie dem Motor (33) zuzuführen, und
eine Einstelleinheit für die elektrische Leistung (82), die dazu konfiguriert ist, die elektrische Leistung einstellen zu können, die von der Sekundärzelleneinheit (81) dem Motor (33) zuzuführen ist, und
die Sekundärzelleneinheit (81) und die elektrische Leistungseinstelleinheit (82) außerhalb des Fachs (60) und über dem Fach (60) angeordnet sind.

6. Brennstoffzellenfahrzeug nach Anspruch 5, wobei die Sekundärzelleneinheit (81) von der elektrischen Leistungseinstelleinheit (82) näher an der Vorderseite des Fahrzeugs angeordnet ist.

## Revendications

1. Véhicule à pile à combustible comprenant :
une partie d'actionnement (10) comportant une roue avant (11) située plus près d'un côté avant du véhicule et un dispositif d'actionnement (12) utilisé pour une opération de déplacement ;
une partie de conduite (20) configurée pour pouvoir permettre à un passager (P) de monter à bord et située plus près d'un côté arrière du véhicule par rapport à la partie d'actionnement (10) ;
une partie d'entraînement (30) comportant une roue arrière (31) située plus près du côté arrière du véhicule par rapport à la roue avant (11), et un dispositif d'entraînement (32), le dispositif d'entraînement (32) comportant un moteur (33) configuré pour pouvoir entraîner la roue arrière (31), et un dispositif de commande de moteur (34) configuré pour pouvoir commander le moteur (33), la partie d'entraînement (30) étant située plus près du côté arrière du véhicule par rapport à la partie de conduite (20) ;
une unité de pile à combustible (40) configurée pour pouvoir générer de l'énergie électrique utilisée pour entraîner le moteur (33) ; et
une pluralité de réservoirs de carburant (50) configurés pour pouvoir stocker du carburant utilisé pour la production d'énergie électrique dans l'unité de pile à combustible (40),
**caractérisé en ce que**
la partie de conduite (20) comporte un siège (21) configuré de sorte que le passager (P) puisse être assis,
le véhicule à pile à combustible comporte un compartiment (60) pour monter l'unité de pile à combustible (40) et les réservoirs de carburant (50), le compartiment (60) étant défini par un logement (61), et le compartiment (60) étant situé plus près du côté arrière du véhicule par rapport au siège (21) de la partie de conduite (20),
la partie d'entraînement (30) comporte une région de bord avant (30a) située plus près du côté avant du véhicule et une région de bord supérieur (30b) située plus près d'un côté supérieur, le compartiment (60) est disposé le long des régions de bord avant et de bord supérieur (30a, 30b) de la partie d'entraînement (30) à l'extérieur de la partie d'entraînement (30),
le compartiment (60) comporte un orifice d'entrée d'air (60a) configuré pour permettre à de l'air de s'y écouler et un orifice d'échappement (62) configuré pour pouvoir évacuer un gaz existant dans le compartiment (60) vers l'extérieur du compartiment (60),
l'orifice d'entrée d'air (60a) est disposé à une extrémité inférieure du compartiment (60), et
l'orifice d'échappement (62) est disposé à une extrémité arrière du compartiment (60) située plus près du côté arrière du véhicule par rapport à la partie d'entraînement (30).

2. Véhicule à pile à combustible selon la revendication 1, dans lequel
le compartiment (60) comprend un compartiment de réservoir (60b) disposé le long de la région de bord avant (30a) de la partie d'entraînement (30) et un compartiment de pile à combustible (60c) disposé le long de la région de bord supérieur (30b) de la partie d'entraînement (30) depuis une extrémité supérieure du compartiment de réservoir (60b) vers le côté arrière du véhicule,
le compartiment de réservoir (60b) du compartiment (60) est situé plus près du côté avant du véhicule par rapport au dispositif d'entraînement (32) et supporte les réservoirs de carburant (50),
le compartiment de pile à combustible (60c) du compartiment (60) est situé plus près du côté supérieur du dispositif d'entraînement (32) et supporte l'unité de pile à combustible (40),
l'orifice d'entrée d'air (60a) est disposé à une extrémité inférieure du compartiment de réservoir (60b) du compartiment (60), et
l'orifice d'échappement (62) est disposé à une extrémité arrière du compartiment de pile à combustible (60c) du compartiment (60) située plus près du côté arrière du véhicule par rapport à la partie d'entraînement (30).

3. Véhicule à pile à combustible selon la revendication 1 ou 2, dans lequel
le véhicule à pile à combustible comporte
un réservoir de vidange (71) configuré pour pouvoir stocker l'eau produite dans un empilement de piles à combustible (41) de l'unité de pile à combustible (40) et
un tuyau de vidange (72) s'étendant entre l'empilement de piles à combustible (41) et le réservoir de vidange (71) de sorte que l'eau produite dans l'empilement de piles à combustible (41) est envoyée au réservoir de vidange (71),
la partie d'entraînement (30) comporte le réservoir de vidange (71),
le réservoir de vidange (71) est situé sur un côté dans une direction de largeur de véhicule du dispositif d'entraînement (32) dans la partie d'entraînement (30), et
l'empilement de piles à combustible (41) est disposé dans une partie supérieure du compartiment de pile à combustible (60c) située plus près du côté supérieur.

4. Véhicule à pile à combustible selon la revendication 3, dans lequel
le réservoir de vidange (71) est situé sur un côté du moteur (33) du dispositif d'entraînement (32) dans la direction de largeur de véhicule, et
le dispositif de commande de moteur (34) du dispositif d'entraînement (32) est situé de l'autre côté du moteur (33) du dispositif d'entraînement (32) dans la direction de largeur de véhicule.

5. Véhicule à pile à combustible selon l'une quelconque des revendications 1 à 4, dans lequel
le véhicule à pile à combustible comporte
une unité de pile secondaire (81) configurée pour pouvoir être chargée avec l'énergie électrique générée par l'unité de pile à combustible (40) et pour fournir l'énergie électrique au moteur (33) et
une unité de réglage de la puissance électrique (82) configurée pour pouvoir régler la puissance électrique à fournir depuis l'unité de pile secondaire (81) au moteur (33), et
l'unité de pile secondaire (81) et l'unité de réglage de la puissance électrique (82) sont disposées à l'extérieur du compartiment (60) et au-dessus du compartiment (60).

6. Véhicule à pile à combustible selon la revendication 5, dans lequel
l'unité de pile secondaire (81) est disposée plus près du côté avant du véhicule par rapport à l'unité de réglage de la puissance électrique (82).
